# EUROPÄISCHE PATENTSCHRIFT

(11) **EP 3 941 799 B1**
(45) Veröffentlichungstag und Bekanntmachung des Hinweises auf die Patenterteilung: **08.05.2024**
(21) Anmeldenummer: 19820696.3
(22) Anmeldetag: 09.12.2019
(51) Int. Cl.: B62B 3/00

(54) **VERFAHREN ZUM TRANSPORTIEREN UND LAGERN VON GEGENSTÄNDEN**
METHOD FOR TRANSPORTING AND STORING OBJECTS
PROCÉDÉ POUR LE TRANSPORT ET LE STOCKAGE D'OBJETS

(30) Priorität: 22.01.2019 DE 102019101484
(43) Veröffentlichungstag der Anmeldung: 26.01.2022
(73) Patentinhaber: Wanzl GmbH & Co. KGaA, 89340 Leipheim (DE)
(72) Erfinder: LUTZENBERGER, Thomas, 87739 Loppenhausen (DE); WANNINGER, Lothar, 87719 Mindelheim (DE); KOTTER, Lukas, 89331 Burgau (DE)
(86) Internationale Anmeldenummer: PCT/EP2019/084155
(87) Internationale Veröffentlichungsnummer: WO 2020/151867

(56) Entgegenhaltungen:
- DE-A1-102011 014 435
- DE-U1-202004 009 067
- DE-U1-202013 103 507
- US-A1- 2015 191 189
- US-B1- 8 084 993

## Beschreibung

Die vorliegende Erfindung betrifft ein Verfahren für einen von Hand beweglichen Rollcontainer zum Transportieren und Lagern von Gegenständen, die als Gefahrengut eingestuft sind, insbesondere Altbatterien mit einem größeren Stückgewicht, wie z.B. Lithium-Akkus-.

Ein Rollcontainer ist z.B. in der DE 10 2007 013 887 B4 beschrieben. Dieser weist Seitenwände und eine Bodenplatte auf. Vier Rollen sind an jeder Ecke an der Bodenplatte vorgesehen. Seitenwände und Bodenplatte bestehen aus Rahmen, an denen waagrechte und senkrechte Stäbe angeordnet sind.

Ein weiterer Rollcontainer ist aus der DE 10 2016 121 749 A1 bekannt. Es sind Rahmenteile und eine Bodenplatte mit Rollen vorgesehen. Er dient als sogenannter Übernahmewagen und findet bei der Verladung von Sterilgütern Einsatz.

Die DE 601 04 493 T2 offenbart einen Rollcontainer zum Transportieren von Verpackungen, insbesondere Flaschen. Er weist Seitenwände auf, die eine Anzahl an Böden tragen. Es ist eine ausziehbare Plattform, zum Empfangen einer Anzahl an Verpackungen, vorgesehen. Die Plattform ist zwischen einer ausgefahrenen Ladeposition und einer zurückgezogenen, verriegelten Transportposition bewegbar.

Die US 2015/0191189 A1 und auch die DE 20 2004 009 067 U1 beschreiben ebenfalls einen von Hand beweglichen Rollcontainer mit Seitenwänden, einer Bodenplatte und Rollen sowie einer Schiebeeinrichtung.

Weiterhin offenbart die DE 10 2011 014 435 A1 einen Transportbehälter, der als Schutzvorrichtung für eine Batterie Verwendung findet. Der Behälter ist aus einem schwer entflammbaren Material, in welchem eine Batterie anordbar ist. Weiterhin ist der Behälter mit einem Schutzgas füllbar und/oder gefüllt.

Die neuere Gesetzgebung schreibt vor, dass größere defekte oder alte Batterien und hierbei insbesondere Lithium-Akkus, wie sie z.B. bei Elektro-Fahrrädern oder Elektro-Autos eingebaut werden, von dem Vertreiber wieder zurückgenommen werden müssen. Die Handhabung mit diesen Altbatterien unterliegt besonderen Vorschriften, da sie als Gefahrengut eingestuft sind. Bei nicht gerechter Handhabung dieser Altbatterien kann es leicht zu einem Kurzschluss kommen. Ein solcher kann die Ursache für einen Brand bilden.

Vor diesem Hintergrund ist es eine Aufgabe der vorliegenden Erfindung, ein Verfahren zur Handhabung von größeren Altbatterien mit einem Rollcontainer bereitzustellen.

Gegenstand der Erfindung und Lösung der Aufgabe ist ein Verfahren zur Handhabung von größeren Altbatterien gemäß Anspruch 1. Bevorzugte Ausführungsbeispiele sind in den abhängigen Ansprüchen definiert.

Gemäß einem Aspekt wird diese Aufgabe gelöst durch einen von Hand beweglichen Rollcontainer zum Transport und Lagern von Gegenständen, wie z.B. Altbatterien, insbesondere Lithium-Akkus, mit Seitenwänden, einer Bodenplatte und Rollen sowie einer Schiebeinrichtung, wobei ein Transportbehälter und eine Ablagevorrichtung für einen Deckel zum Verschließen des Transportbehälters auf der Bodenplatte des Rollcontainers angeordnet sind.

Es ist somit eine Idee der vorliegenden Erfindung, größere defekte oder kritische Altbatterien und hierbei insbesondere Lithium-Batterien bzw. Lithium-Akkus sicher mittels einer Aufnahmevorrichtung, die z.B. als Greifarm ausgeführt sein kann, in einen Transportbehälter heben zu können, so dass ein Berühren der Altbatterie nicht notwendig ist. Durch die Anordnung in einem Transportbehälter (hierfür werden handelsübliche Behältersysteme angeboten) und durch das Verschließen des Transportbehälters mit einem zusätzlich gesicherten Deckel können Altbatterien zunächst sicher gelagert werden und bei einer Abholung durch einen Entsorgungsbetrieb diesem zur Entsorgung bereitgestellt werden.

Vorteilhaft ist die Verwendung eines Rollcontainers, da dieser an die Stelle in einem Laden, Lager oder einer Werkstatt gefahren werden kann, an der die größere Altbatterie aus einem Fahrrad, einem PKW oder dergleichen entnommen wird.

Nach dem Beladen des Rollcontainers mit einer oder mehreren Altbatterien kann der Rollcontainer an einen sicheren Platz zur Lagerung geschoben werden. Gegebenenfalls bietet es sich an, vier Seitenwände vorzusehen und den Rollcontainer zusätzlich gegen einen Zugriff Unbefugter zu sichern.

Nachdem solche Altbatterien in regelmäßigen Abständen von einem Entsorgungsbetrieb abgeholt werden, kann der Rollcontainer mit dem Transportbehälter, in dem eine oder mehrere größere Altbatterien gelagert sind, zu dem hierfür zur Verfügung gestellten Transportmittel des Entsorgungsbetriebs geschoben werden. Der geschlossene Transportbehälter kann dann in das Transportmittel geladen werden. Meist wird der Transportbehälter mit einem zusätzlichen Füllstoff gefüllt. Das verhindert eine mögliche Gefahr beim weiteren Transport.

Es ist an einer der Seitenwände eine Aufnahmevorrichtung zur Aufnahme und Beförderung der Altbatterie angeordnet. Eine Aufnahmevorrichtung in Form einer Greifvorrichtung bietet sich für diesen Anwendungsfall an. Die Anordnung der Aufnahmevorrichtung an der Rückwand des Rollcontainers ist hierbei sinnvoll. Hierdurch ist ein einfacher Zugriff gegeben und die Aufnahmevorrichtung kann nach Gebrauch auch wieder an eine entsprechende Haltung angeordnet werden.

In einer bevorzugten Ausgestaltung ist am Rollcontainer weiterhin eine Anzeigevorrichtung vorgesehen. Diese kann ebenfalls an der Rückwand des Rollcontainers angeordnet sein. Sie zeigt an, dass der Rollcontainer für den Transport und die Lagerung von Altbatterien, insbesondere defekten größeren Lithium-Akkus, vorgesehen ist. Ferner kann an der Anzeigevorrichtung eine genaue Bedienungsanleitung zur Verfügung gestellt werden.

In einer weiteren Ausgestaltung ist wenigstens eine Haltevorrichtung für weitere Gegenstände vorgesehen. Zusätzliche Gegenstände für den sicheren Umgang mit kritischen und/oder defekten größeren Altbatterien sind z.B. Lederhandschuhe, eine Lederschürze, eine Atemmaske, und ein zusätzlicher Gesichtsschutz. Auch Werkzeuge wie ein Seitenschneider, eine Greifzange, könnten an einer solchen Haltevorrichtung angeordnet sein.

Zusätzlich ist gerade bei einer Aufnahme von mehreren größeren Altbatterien denkbar, dass jede Altbatterie zusätzlich in einer eigenen Kunststoffhülle verpackt wird. Solche Kunststoffhüllen können zur einfachen Entnahme auch bereits an einer Halterung angeordnet sein.

In einer weiteren bevorzugten Ausgestaltung ist der Rollcontainer mit Lenkrollen und/oder Bockrollen ausgestattet. Die Verwendung von einer Kombination aus Lenkrollen und Bockrollen vereinfacht das Fahrverhalten erheblich.

In einer weiteren Ausgestaltung ist wenigstens eine der Rollen mit einem Feststeller ausgestattet. Der Rollcontainer kann somit zusätzlich gegen ein ungewolltes Wegrollen gesichert werden. Eine ordnungsgemäße Lagerung der Altbatterien kann dadurch sichergestellt werden. Auch ein vereinfachtes Einbringen der Altbatterien in den Transportbehälter, sowie ein sicheres Verladen des Transportbehälters kann durch die Verwendung eines Feststellers ermöglicht werden.

In einer weiteren Ausgestaltung ist eine zusätzliche 5. Rolle vorgesehen. Das Fahrverhalten wird somit zusätzlich positiv beeinflusst, insbesondere dann, wenn eine Vielzahl von Altbatterien auf dem Rollcontainer geladen ist.

In einer bevorzugten Ausgestaltung findet als Schiebeeinrichtung ein Griffbügelpaar Verwendung. Gerade bei einer Ausgestaltung des Rollcontainers mit einer Rückwand und zwei Seitenwänden kann hierdurch ein verbessertes Fahrverhalten realisiert werden.

Offenbart ist somit ein Verfahren zum Transportieren und Lagern von Altbatterien, insbesondere Lithium-Akkus, wobei hierbei der Rollcontainer zu der defekten oder kritischen Altbatterie gefahren wird, wobei ein Transportbehälter auf der Bodenplatte zur Aufnahme der Altbatterie bereitsteht, der mit einem Deckel versehene Transportbehälter wird geöffnet, alternativ ist der Transportbehälter bereits geöffnet und der Deckel liegt auf der Ablagevorrichtung, die Altbatterie wird mittels der Aufnahmevorrichtung in den geöffneten Transportbehälter gehoben, Sicherheitsfüllmaterial wird eingebracht. Der Transportbehälter wird anschließend mit dem Deckel verschlossen oder verriegelt und dann gegebenenfalls mit weiteren Altbatterien an einen Entsorgungsbetrieb übergeben wird.

In einer besonders bevorzugten Ausgestaltung ist der Transportbehälter bereits mit einem Sicherheitsfüllmaterial, wie Löschmittel, gefüllt.

Hierdurch kann ein sicherer Umgang mit den Altbatterien und insbesondere den Lithium-Akkus ermöglicht werden. Die Bodenplatte des Rollcontainers bietet ausreichend Fläche, einen Transportbehälter bereitzustellen. Ferner besteht die Möglichkeit, den Deckel auf bequeme Weise auf einer Ablagefläche neben dem Transportbehälter bereitzulegen und, nachdem die Altbatterie in dem Transportbehälter verwahrt ist, den Deckel wieder anzuordnen. Die Verwendung einer rechteckigen Bodenplatte erweist sich hierbei als vorteilhaft, da solche Transportbehälter zur besseren Bestückung oft rechteckig ausgeführt sind. Der eigentliche Transportbehälter und der Deckel können bei der rechteckigen Ausführung der Bodenplatte in vorteilhafterweise nebeneinander angeordnet werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, wobei die Erfindung nur durch die Ansprüche definiert wird.

Ein Ausführungsbeispiel der Erfindung ist in der Zeichnung dargestellt und wird in der nachfolgenden Beschreibung näher erläutert. Es zeigt:

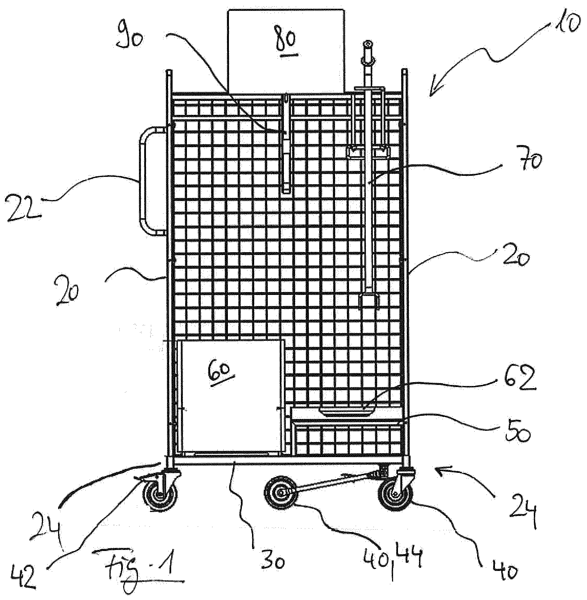

- Figur 1: einen Rollcontainer mit einem Transportbehälter in Seitenansicht.

In Figur 1 ist ein Rollcontainer 10 dargestellt. Dieser ist von Hand beweglich und zum Transport und Lagern von Gegenständen wie z.B. größeren Altbatterien vorgesehen. Insbesondere bietet es sich an, größere Lithium-Akkus, die bei einem Stückgewicht von über 500 g als Gefahrengut einzustufen sind, in diesem Rollcontainer zu transportieren und zu lagern.

Der Rollcontainer ist mit Seitenwänden 20 ausgestattet. In Figur 1 sind zwei Seitenwände 20 und eine Rückwand 26 vorgesehen. Eine andere Anzahl an Seitenwänden ist auch denkbar. Auch könnte eine vordere Seitenwand sinnvoll sein, um einen Zugriff von Unbefugten zu verhindern. Insbesondere wäre hier auch eine zweiteilige vordere Seitenwand denkbar.

Der Rollcontainer 10 weist eine Bodenplatte 30 auf. Die Bodenplatte 30 ist vorzugsweise aus einem Rahmen gebildet, der ein Drahtgitter, bestehend aus quer und längs angeordneten Drähten, hält.

Auch bei den Seitenwänden 20 bietet es sich an, ein Rahmenteil vorzusehen, das ein Drahtgitter, bestehend aus waagrechten und senkrechten Drähten, trägt. Die Rückwand 26 kann ebenfalls auf diese Art gefertigt sein. In einer weiterführenden Ausgestaltungsform weist die Rückwand nur ein oberes Rahmenteil auf, das ortsfest oder wechselbar in die Seitenwände 20 eingehängt oder an den Seitenwänden 20 angeordnet wird.

Der Rollcontainer 10 weist Rollen 40 auf. Diese sind an den Ecken 24 des Rollcontainers angeordnet. Vier Rollen 40 sind hierbei vorzugsweise vorgesehen. Es hat sich als sinnvoll erwiesen, wenigstens eine der Rollen mit einem Feststeller 42 auszustatten. Als Rollen 40 sind Lenkrollen und/oder Bockrollen vorgesehen. Eine Kombination aus zwei Lenkrollen und zwei Bockrollen hat sich als sinnvoll erwiesen.

Zur einfacheren Handhabe ist zusätzlich eine 5. Rolle 44 vorgesehen. Diese ist an einer Aufnahmevorrichtung an der Unterseite der Bodenplatte 30 befestigt. Eine mittige Anordnung wie in Fig. 1 dargestellt hat sich sehr günstig auf das Fahrverhalten auswirkt.

Der Rollcontainer 10 weist eine Schiebeeinrichtung 22 auf. Diese ist, wie in Fig. 1 dargestellt, aus einem Griffbügelpaar gebildet. Eine Anordnung an einer der Seitenwände 20 hat sich als sinnvoll erwiesen. Es bieten sich hierbei insbesondere die Rahmenteile für eine Anordnung dieser Griffbügel an. Die Griffbügel sind vorzugsweise auf gleicher Höhe angeordnet. Eine andere Schiebeinrichtung, wie z.B. eine waagrechte Griffstange, die sich über die Breite einer Seitenwand 20 erstreckt, ist denkbar.

Vorzugsweise bietet es sich an, die wenigstens eine Rolle 40 mit dem Feststeller 42 an der Seite vorzusehen, an dem auch die Schiebeeinrichtung 22 angeordnet ist. Sofern ein 5. Rad 44 Einsatz findet, ist die Aufnahmevorrichtung für das 5. Rad an der Unterseite der Bodenplatte 30 nahe der Seitenwand 20 angebracht, die keine Schiebeeinrichtung 22 aufweist. Das beeinflusst das Fahrverhalten weiterhin positiv.

Wie in Fig. 1 darstellt, ist am Rollcontainer 10 eine Anzeigevorrichtung 80 vorgesehen. Diese ist gut ersichtlich oberhalb der Rückwand 26 angeordnet. Sie kann als Beschriftungstafel für eine Bedienungsanleitung dienen. Es kann aber auch eine elektronische Anzeigevorrichtung angebracht sein. Mit Hilfe der Anzeigevorrichtung 80 wird eine Bedienungsanleitung für einen sachgerechten Umgang von Altbatterien zur Verfügung gestellt.

Am Rollcontainer 10 ist weiterhin wenigstens eine Haltevorrichtung 90 für weitere Gegenstände vorgesehen. An der Haltevorrichtung 90 können eine Schutzausrüstung sowie weiteres Zubehör angeordnet werden. Wie in Fig. 1 dargestellt, ist die Haltevorrichtung 90 unterhalb der Anzeigevorrichtung 80 an der Rückwand 26 vorgesehen. Es sind aber auch andere Orte zum Anbringen der Haltevorrichtung 90 denkbar.

Der Rollcontainer weist einen Transportbehälter 60 und eine Ablagevorrichtung 50 für einen Deckel 62 zum Verschließen des Transportbehälters 60 auf. Ein solcher Transportbehälter 60 ist Teil eines handelsüblichen Systems, das einen gesicherten Transport von Gefahrengütern ermöglicht. Der Transportbehälter 60 kann z.B. als quaderförmige Behälterbox mit einem Deckel 62 ausgeführt sein. Der Transportbehälter 60 ist Platz sparend auf der Bodenplatte 30 des Rollcontainers 10 angeordnet. Es hat sich als sinnvoll erwiesen, den Deckel 62 neben dem Transportbehälter 60 anzuordnen. Die Ablagevorrichtung 50 weist einen Abstand zur Bodenplatte 30 auf. In diesem Raum zwischen Ablagevorrichtung 50 und Bodenplatte 30 können weitere Hilfsmittel wie Werkzeug oder Sicherheitsfüllmaterial zum Auffüllen des Behälters für den weiteren Transport zur Verfügung gestellt werden. Auch kann in dem Raum unterhalb der Ablagevorrichtung 50 weiteres Sicherheitsfüllmaterial, wie Löschmittel, vorgesehen sein. Die Ablagevorrichtung 50 ist ortsfest an einer Seitenwand 20 und der Bodenplatte 30 angeordnet. Sie ist aus wenigstens einer waagrechten und einer senkrechten Vorrichtung gebildet. Vorzugseise entspricht sie von ihrer Querschnittsfläche ca. der halben Bodenplatte. Zwischen Ablagevorrichtung 50 und dem Transportbehälter 60 ist ausreichend Platz vorzusehen, um den Transportbehälter 60 auf einfache Art auf den Rollcontainer 10 heben zu können und ihn im gefüllten Zustand auch wieder vom Rollcontainer 10 herunterheben zu können.

An einer der Seitenwänden 20 ist eine Aufnahmevorrichtung 70 zur Aufnahme und Beförderung der Altbatterie angeordnet. Diese kann als Greifarm ausgestattet sein. In der vorliegenden Fig. 1 ist sie an der Rückwand 26 angebracht, kann auf einfache Weise entnommen und nach Gebrauch wieder dort angeordnet werden.

Üblicherweise läuft das Verfahren zum Transportieren und Lagern von Altbatterien, insbesondere Lithium-Akkus, wie nachfolgend beschrieben ab:
- der Rollcontainer 10 wird zu der defekten oder kritischen Altbatterie gefahren,
- ein Transportbehälter 60 steht auf der Bodenplatte 30 zur Aufnahme der Altbatterie bereit,
- der mit einem Deckel 62 versehene Transportbehälter 60 wird geöffnet,
- oder aber der Deckel 62 liegt bereits auf einer Ablagevorrichtung 50,
- die Altbatterie wird, vorzugweise mittels der Aufnahmevorrichtung 70, in den geöffneten Transportbehälter 60 gehoben,
- Sicherheitsfüllmaterial wird eingebracht,
- der Transportbehälter 60 wird anschließend mit dem Deckel 62 verschlossen oder verriegelt
- und dann gegebenenfalls mit weiteren Altbatterien an einen Entsorgungsbetrieb übergeben.

Durch diesen Ablauf kann eine sichere und ungefährliche Handhabe mit den Altbatterien bzw. Lithium-Akkus sichergestellt werden.

In einer Variante ist der Rollcontainer 10 mit einer Antriebseinrichtung ausgestattet. Eine solche ist beispielsweise in der DE 10 2016 101 490 A1 offenbart.

### Bezugszeichenliste

- 10: Rollcontainer
- 20: Seitenwand
- 22: Schiebeeinrichtung
- 24: Ecke
- 26: Rückwand
- 30: Bodenplatte
- 40: Rolle
- 42: Feststeller
- 44: 5. Rolle
- 50: Ablagevorrichtung
- 60: Transportbehälter
- 62: Deckel
- 70: Aufnahmevorrichtung
- 80: Anzeigevorrichtung
- 90: Haltevorrichtung

## Patentansprüche

1. Verfahren zum Transportieren und Lagern von Altbatterien, insbesondere Lithium-Akkus, mit einem Rollcontainer (10), der zu der defekten oder kritischen Altbatterie gefahren wird,
wobei der Rollcontainer ein von Hand beweglicher Rollcontainer (10) zum Transport und Lagern von Gegenständen mit Seitenwänden (20), einer Bodenplatte (30) und Rollen (40) sowie einer Schiebeeinrichtung (22) ist, wobei ein Transportbehälter (60) und eine Ablagevorrichtung (50) für einen Deckel (62) zum Verschließen des Transportbehälters (60) auf der Bodenplatte des Rollcontainers (10) angeordnet sind,
wobei an einer der Seitenwände (20) des Rollcontainers (10) eine Aufnahmevorrichtung (70) zur Aufnahme und Beförderung der Altbatterie angeordnet ist,
wobei der Transportbehälter (60) auf der Bodenplatte (30) zur Aufnahme der Altbatterie bereitsteht, der mit einem Deckel (62) versehene Transportbehälter (60) geöffnet wird, oder wobei der Deckel (62) bereits auf einer Ablagevorrichtung (50) liegt, die Altbatterie mittels der Aufnahmevorrichtung (70) in den geöffneten Transportbehälter (60) gehoben wird, Sicherheitsmaterial eingebracht wird, der Transportbehälter (60) anschließend mit dem Deckel (62) verschlossen und verriegelt wird und dann gegebenenfalls mit weiteren Altbatterien an einen Entsorgungsbetrieb übergeben wird.

2. Verfahren nach Anspruch 1, **dadurch gekennzeichnet, dass** am Rollcontainer (10) eine Anzeigevorrichtung (80) vorgesehen ist.

3. Verfahren nach einem der Ansprüche 1 oder 2, **dadurch gekennzeichnet, dass** am Rollcontainer (10) wenigstens eine Haltevorrichtung (90) für weitere Gegenstände vorgesehen ist.

4. Verfahren nach einem der Ansprüche 1 bis 3, **dadurch gekennzeichnet, dass** als Rollen (40) Lenkrollen und/oder Bockrollen vorgesehen sind.

5. Verfahren nach einem der Ansprüche 1 bis 4, **dadurch gekennzeichnet, dass** wenigstens eine der Rollen (40) mit einem Feststeller (42) ausgestattet ist.

6. Verfahren nach einem der Ansprüche 1 bis 5, **dadurch gekennzeichnet, dass** zusätzlich eine fünfte Rolle (44) vorgesehen ist.

7. Verfahren nach einem der Ansprüche 1 bis 6, **dadurch gekennzeichnet, dass** als Schiebeeinrichtung (22) ein Griffbügelpaar Verwendung findet.

## Claims

1. Method for transport and storage of waste batteries, in particular lithium storage batteries, using a roller container (10), which is moved to the defective or critical waste batteries,
wherein the roller container is a manually movable roller container (10) for transport and storage of objects that has side walls (20), has a base plate (30) and castors (40) and has a pushing means (22), wherein a transport container (60) and a support device (50) for a cover (62) for closing the transport container (60) are arranged on the base plate of the roller container (10),
wherein a receiving device (70) for receiving and conveying the waste batteries is arranged on one of the side walls (20) of the roller container (10),
wherein the transport container (60), on the base plate (30), is ready to receive the waste battery, the transport container (60), provided with a cover (62), is opened, or wherein the cover (62) is already situated on a support device (50), the waste battery is lifted into the open transport container (60) by means of the receiving device (70), safety material is introduced, and the transport container (60) is subsequently closed and locked using the cover (62) and is then, possibly with further waste batteries, handed over to a disposal company.

2. Method according to Claim 1, **characterized in that** an indicator device (80) is provided on the roller container (10).

3. Method according to either of Claims 1 and 2, **characterized in that** at least one holding device (90) for further objects is provided on the roller container (10).

4. Method according to one of Claims 1 to 3, **characterized in that** swivel castors and/or fixed castors are provided as castors (40).

5. Method according to one of Claims 1 to 4, **characterized in that** at least one of the castors (40) is equipped with a fixing means (42).

6. Method according to one of Claims 1 to 5, **characterized in that** a fifth castor (44) is additionally provided.

7. Method according to one of Claims 1 to 6, **characterized in that** a pair of bow-shaped handles is used as pushing device (22).

## Revendications

1. Procédé de transport et de stockage de batteries usagées, en particulier d'accumulateurs au lithium, avec un conteneur roulant (10) qui est déplacé vers la batterie usagée défectueuse ou critique,
le conteneur roulant étant un conteneur roulant (10) mobile à la main pour le transport et le stockage d'objets, doté de parois latérales (20), d'une plaque de fond (30) et de roulettes (40), ainsi que d'un dispositif de poussée (22), un récipient de transport (60) et un dispositif de stockage (50) pour un couvercle (62) de de fermeture du récipient de transport (60) étant agencés sur la plaque de fond du conteneur roulant (10),
un dispositif de réception (70) destiné à recevoir et à transporter la batterie usagée étant agencé sur l'une des parois latérales (20) du conteneur roulant (10),
le conteneur de transport (60) étant prêt à recevoir la batterie usagée sur la plaque de fond (30), le conteneur de transport (60) pourvu d'un couvercle (62) étant ouvert, ou le couvercle (62) étant déjà posé sur un dispositif de stockage (50), la batterie usagée étant soulevée dans le conteneur de transport (60) ouvert au moyen du dispositif de réception (70), du matériau de sécurité étant introduit, le conteneur de transport (60) étant ensuite fermé et verrouillé avec le couvercle (62), puis optionnellement remis à une entreprise d'élimination avec d'autres batteries usagées.

2. Procédé selon la revendication 1, **caractérisé en ce qu'**un dispositif d'affichage (80) est prévu sur le conteneur roulant (10).

3. Procédé selon l'une des revendications 1 ou 2, **caractérisé en ce qu'**il est prévu sur le conteneur roulant (10) au moins un dispositif de retenue (90) pour d'autres objets.

4. Procédé selon l'une des revendications 1 à 3, **caractérisé en ce que** des roulettes pivotantes et/ou des roulettes fixes sont prévues en tant que roulettes (40).

5. Procédé selon l'une des revendications 1 à 4, **caractérisé en ce qu'**au moins l'une des roulettes (40) est équipée d'un dispositif de blocage (42).

6. Procédé selon l'une des revendications 1 à 5, **caractérisé en ce qu'**il est prévu en outre une cinquième roulette (44).

7. Procédé selon l'une des revendications 1 à 6, **caractérisé en ce qu'**une paire d'étriers formant poignées est utilisée comme dispositif de poussée (22).
